# EUROPEAN PATENT APPLICATION

(11) **EP 2 741 487 A1**
(43) Date of publication of application: **11.06.2014**
(21) Application number: 12306535.1
(22) Date of filing: 06.12.2012
(51) Int. Cl.: H04N 1/60

(54) **Video coding and decoding methods and corresponding devices**

(71) Applicant: Thomson Licensing, 92130 Issy-les-Moulineaux (FR)
(72) Inventor: Andrivon, Pierre, 35576 Cesson Sévigné (FR); Lopez, Patrick, 35576 Cesson Sévigné (FR); Bordes, Philippe, 35576 Cesson Sévigné (FR); Salmon, Philippe, 35576 Cesson Sévigné (FR); Hiron, Franck, 35576 Cesson Sévigné (FR)
(74) Representative: Perrot, Sébastien

(57) **Abstract**

A decoding method for decoding a video bitstream is disclosed. The decoding method comprises:
- decoding (12, 12') a picture block compliant with a first luminance workflow from a first part of the video bitstream;
- transforming (14, 14') the picture block into a transformed picture block compliant with a second luminance workflow different from the first luminance workflow; and
- decoding (16, 16') a picture block compliant with the second luminance workflow from the transformed picture block and from a second part of the video bitstream.

## Description

### 1. FIELD OF THE INVENTION

The invention relates to a decoding method for decoding a video bitstream, possibly a scalable video bitstream comprising one base layer and at least one additional layer. The invention further relates to corresponding coding method, coding and decoding devices.

### 2. BACKGROUND OF THE INVENTION

In the analogic world, videos are usually captured and stored as a R'G'B' signal. The primes indicate non-linear-light signal, i.e. gamma corrected signal. For coding efficiency purpose, the R'G'B' signal is further transformed into a Y'PbPr signal whose components are more decorrelated. In the literature, Y'PbPr is also sometimes referred to as Y'Pb'Pr.' However, transforming directly the R'G'B' signal into an Y'PbPr signal (referred to as first luminance workflow) is not satisfying from colorimetry point of view because the transform operates on a non-linear-light signal R'G'B' and thus introduces approximations. An appropriate workflow (referred to as second luminance workflow) comprises transforming an RGB signal into a linear-light luminance component Y and only then applying the non-linearity to get Y'PbPr. Chroma components are obtained from Y'R'B'. A Y'PbPr signal is said to be constant luminance or non-constant luminance depending on the luminance workflow used to derive it. Y'PbPr is non-constant luminance signal when it is derived directly from R'G'B' (non-linear-light primaries) while it is a constant luminance signal when it is derived from RGB (linear-light primaries) via Y and Y'R'B' for chroma components. Former ITU recommendations (ITU-R BT.709 for analogic HDTV signals and ITU-R BT.1361 for digital HDTV signals) are limited to the first luminance workflow. In the digital world, a new ITU recommendation (ITU-R BT. 2020) defined for UHDTV specifies both luminance workflows.

Video coding methods usually comprise intra picture or inter picture prediction. However, this prediction is sub-optimal when the signal to be predicted and the prediction signals are obtained from different luminance workflows.

### 3. BRIEF SUMMARY OF THE INVENTION

The purpose of the invention is to overcome at least one of the disadvantages of the prior art. For this purpose, the invention relates to a decoding method for decoding a video bitstream comprising:
- decoding a picture block compliant with a first luminance workflow from a first part of the video bitstream;
- transforming the picture block into a transformed picture block compliant with a second luminance workflow different from the first luminance workflow; and
- decoding a picture block compliant with the second luminance workflow from the transformed picture block and from a second part of the video bitstream.

According to a specific characteristic of the invention, the first luminance workflow is a non-constant luminance workflow and the second luminance workflow is a constant-luminance workflow or inversely the first luminance workflow is a constant luminance workflow and the second luminance workflow is a non-constant luminance workflow.

According to one aspect of the invention, transforming comprises applying a transform and wherein the method further comprises decoding coefficients of the transform.

In a variant, transforming comprises applying a transform and wherein the method further comprises decoding an index indicating which transform to apply.

Advantageously, the decoding method further comprises decoding at least one flag indicating whether or not to apply the transform.

According to a specific embodiment, transforming further comprises adapting primary coordinates and optionally performing chromatic adaptation.

According to another embodiment, the video bitstream comprises one base layer and at least one additional layer and wherein the first part of the bitstream is the base layer and the second part of the bitstream is the at least one additional layer.

The invention further relates to a coding method for coding a video into a video bitstream comprising:
- coding a picture block compliant with a first luminance workflow into a first part of the video bitstream and reconstructing the picture block;
- transforming the reconstructed picture block into a transformed picture block compliant with a second luminance workflow different from the first luminance workflow; and
- coding a picture block compliant with the second luminance workflow from the transformed picture block into a second part of the video bitstream. According to a specific characteristic of the invention, the first luminance workflow is a non-constant luminance workflow and the second luminance workflow is a constant luminance workflow or inversely the first luminance workflow is a constant luminance workflow and the second luminance workflow is a non-constant luminance workflow.

According to one aspect of the invention, transforming comprises applying a transform and wherein the method further comprises coding coefficients of the transform.

In a variant, transforming comprises applying a transform and wherein the method further comprises coding an index indicating which transform to apply. Advantageously, the coding method further comprises coding at least one flag indicating whether or not to apply the transform.

According to a specific embodiment, transforming further comprises adapting primary coordinates and optionally performing chromatic adaptation.

Inn a specific embodiment, the video bitstream comprises one base layer and at least one additional layer and wherein the first part of the bitstream is the base layer and the second part of the bitstream is the at least one additional layer.

The invention also relates to a video decoder for decoding a video bitstream comprising:
- means for decoding a picture block compliant with a first luminance workflow from a first part of the video bitstream;
- means for transforming the picture block into a transformed picture block compliant with a second luminance workflow different from the first luminance workflow; and
- means for decoding a picture block compliant with the second luminance workflow from the transformed picture block and from a second part of the video bitstream.

The invention also relates to a video coder for coding a video into a video bitstream comprising:
- means for coding a picture block compliant with a first luminance workflow into a first part of the video bitstream;
- means for reconstructing the picture block into a reconstructed picture block;
- means for transforming the reconstructed picture block into a transformed picture block compliant with a second luminance workflow different from the first luminance workflow; and
- means for coding a picture block compliant with the second luminance workflow from the transformed picture block into a second part of the video bitstream.

A video bitstream is also disclosed. The video bitstream encodes at least one picture block compliant with a first luminance workflow, one picture block compliant with a second luminance workflow different from the first luminance workflow and at least one data relative to a transformation of the at least one picture block compliant with the first luminance workflow into a transformed picture block compliant with a second luminance workflow.

### 4. BRIEF DESCRIPTION OF THE DRAWINGS

Other features and advantages of the invention will appear with the following description of some of its embodiments, this description being made in connection with the drawings in which:
- Figure 1A depicts a flowchart of a method for decoding a scalable video bitstream according to the invention;
- Figure 1B depicts a flowchart of a method for decoding a non scalable video bitstream according to the invention;
- Figures 2-3 depict specific steps of the method for decoding a scalable video bitstream;
- Figure 4 depicts base layer's and additional layer's pictures;
- Figures 5 and 6 depict the flowchart of the transformation of a non-constant luminance signal into a constant luminance signal according to a specific embodiment of the invention;
- Figure 7A depicts a flowchart of a method for coding a video into a scalable bitstream according to the invention;
- Figure 7B depicts a flowchart of a method for coding a video in a non scalable bitstream according to the invention;
- Figures 8-9 depict specific steps of the method for coding a video into a scalable bitstream;
- Figure 10 depicts a scalable video decoder according to the invention;
- Figure 11 depicts a scalable video encoder according to the invention;
- Figure 12 depicts a mono-layer video encoder according to the invention;
   and
- Figure 13 depicts a mono-layer video decoder according to the invention.

### 5. DETAILED DESCRIPTION OF THE INVENTION

Each picture of a video comprises pixels or picture points with each of which at least one item of picture data is associated. An item of picture data is for example an item of luma data or an item of chroma data.

The term "motion data" is to be understood in the widest sense. It designates the motion vectors and possibly the reference picture indexes enabling a reference picture to be identified in the picture sequence. It can also comprise an item of information indicating the interpolation type used to determine the prediction block. In fact, in the case where the motion vector associated with a block Bc does not have integer coordinates, it is necessary to interpolate the picture data in the reference picture Ir to determine the prediction block. The motion data associated with a block are generally calculated by a motion estimation method, for example by block matching. However, the invention is in no way limited by the method enabling a motion vector to be associated with a block.

The term "residue" signifies data obtained after extraction of other data. The extraction is generally a subtraction pixel by pixel of prediction data from source data. However, the extraction is more general and notably comprises a weighted subtraction in order for example to account for an illumination compensation model.

The term "coefficients" designates residual data to which a transform has been applied. A DCT ("Discrete Cosine Transform) is an example of such a transform described in chapter 3.4.2.2 of the book by I. E. Richardson called "H.264 and MPEG-4 video compression" published by J. Wiley & Sons in September 2003. The wavelet transform described in chapter 3.4.2.3 of the book by I. E. Richardson and the Hadamard transform are other examples. The "prediction data" term designates data used to predict other data. A prediction block is a block of pixels with which prediction data is associated. A prediction block is obtained from a block or several blocks of the same picture as the picture to which belongs the block that it predicts (spatial prediction or intra-picture prediction) or from one (mono-directional prediction) or several reference blocks (bi-directional prediction or bi-predicted) of at least one different picture (temporal prediction or inter-picture prediction) of the picture to which the block that it predicts belongs.

The term "reconstructed data" designates data (e.g. pixels, blocks) obtained after merging residues with prediction data. The merging is generally a sum of prediction data with residues. However, the merging is more general and notably comprises a weighted sum in order for example to account for an illumination compensation model. A reconstructed block/picture is a block/picture of reconstructed pixels.

In reference to the decoding of pictures, the terms "reconstruction" and "decoding" are very often used as synonyms. Hence, a "reconstructed picture" is also designated under the terminology "decoded picture".

In reference to the coding of pictures, the terms "coder" and "encoder" are synonyms.

The term coding is to be taken in the widest sense. The coding comprises the transformation and/or the quantization of picture data followed by the entropy coding. It can also designate only the entropy coding. In the same way, the decoding comprises the entropy decoding followed by the scaling and/or transformation. It can also designate only the entropy decoding. The word scaling is also known as inverse quantization, the term "inverse" being used with respect to quantization in the encoding method. In the same way, the transformation in the decoding method is also known as inverse transformation with respect to the transformation in the encoding method.

In the following, the word scalable is to be taken in the widest sense. This means that that the word scalable encompasses multiview scalability. Indeed, a scalable bitstream generally comprises a base layer and an additional layer also known as enhancement layer in pure scalable encoding/decoding methods. In the widest sense, the base layer may encode a first view (e.g. a right view) and the additional layer may encode a second view (e.g. a left view). Clearly, the invention also applies to multiview coding/decoding.

All the embodiments are disclosed with respect to the encoding or decoding of a picture block. However, all the embodiments can be applied to any picture part such as a PU (English acronym of "Prediction Unit") as defined in HEVC video coding standard. In the same way, the embodiments can be applied to all the blocks of a picture in order to encode/decode the whole picture.

In the Figures, the represented boxes are purely functional entities, which do not necessarily correspond to physical separated entities. As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code, and so forth), or an embodiment combining software and hardware_aspects that can all generally be referred to herein as a "circuit," "module", or "system." Furthermore, aspects of the present principles can take the form of a computer readable storage medium. Any combination of one or more computer readable storage medium(s) may be utilized.

The flowchart and/or block diagrams in the Figures illustrate the configuration, operation and functionality of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or subcombination.

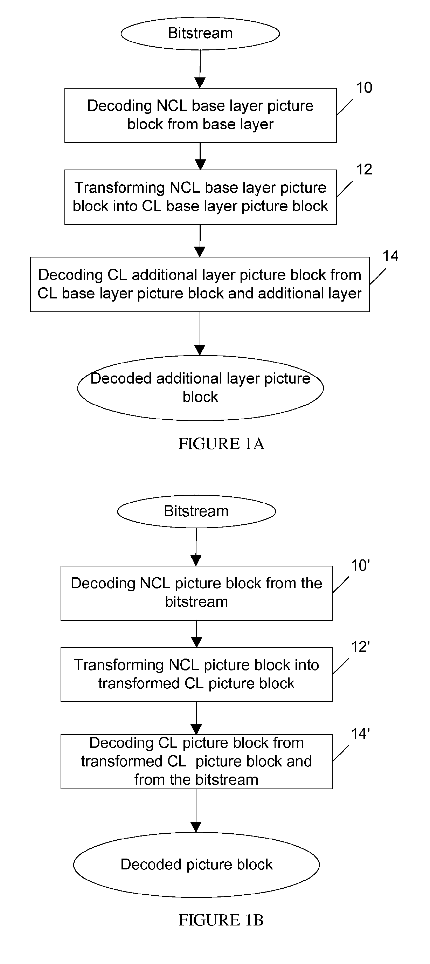

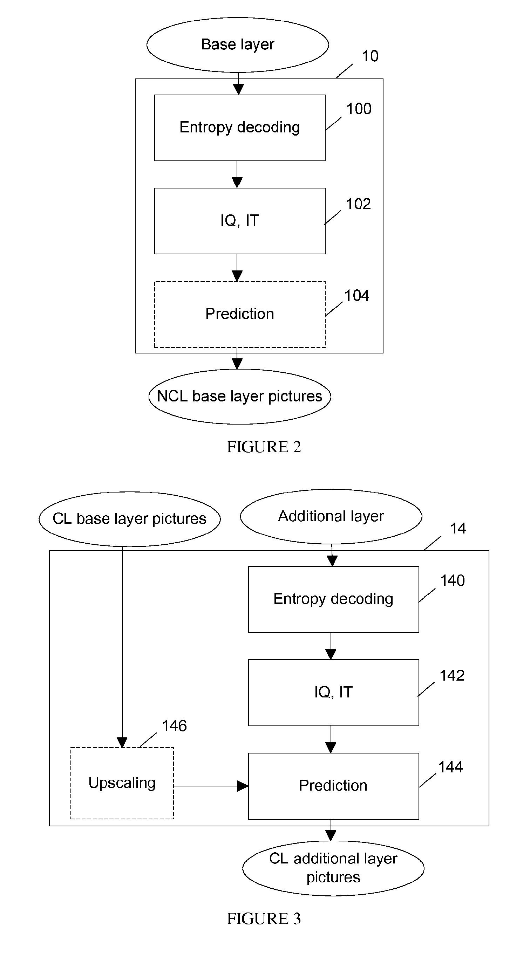

**Figure 1A** depicts the flowchart of a method for decoding a scalable bitstream comprising a base layer and at least one additional layer according to a first embodiment of the invention. In a step 10, a non-constant luminance base layer picture block is decoded from a base layer. NCL is the English acronym of "non-constant luminance" while CL is the English acronym of "constant luminance". According to a specific embodiment disclosed on **Figure 2****,** the decoding of the non-constant luminance base layer picture block comprises, at step 100, decoding from the base layer coefficients, such as DCT coefficients, by entropy decoding. The coefficients are then scaled and transformed into residues at step 102. Optionally, the residues are added at step 104 to prediction data obtained either from previously reconstructed base layer pictures (inter picture prediction) or from previously reconstructed parts of the same base layer picture (intra picture prediction) stored in a memory. These steps are well known by the one skilled in the art are not further disclosed. In case of intra coding without prediction as for example in MPEG-2 (ISO/IEC 13818-2), the NCL base layer picture block is reconstructed directly after step 102. According to another embodiment, the base layer picture blocks are decoded using an MCTF (MCTF is the English acronym of Motion Compensation Temporal Filtering) decoding scheme using wavelet transform. Any other proprietary decoding scheme can be used provided it is compliant with encoding scheme used for encoding the base layer pictures. The base layer picture blocks are for example decoded according to the MPEG-4 AVC standard (ISO/IEC 14496-10). According to a variant, the base layer picture blocks are decoded according to the HEVC standard (ISO/IEC 23008-2) or to the MPEG-2 standard, or to any other video coding standard. Indeed, the invention is not limited by the way the base layer picture blocks are encoded and thus decoded. In ISO/IEC, the HEVC standard will become MPEG-H Part 2 (ISO/IEC 23008-2) and in ITU-T it is likely to become ITU-T Recommendation H.265.

In a step 12, the decoded non-constant luminance base layer picture block is transformed into a transformed constant luminance base layer picture block. The transformed constant luminance base layer picture block is named constant luminance base layer picture block in the following sections for the sake of simplifying. According to a specific embodiment, a transform is applied at step 12 that is known by the decoding method. According to a variant, the transform being defined by its coefficients, the coefficients are decoded either from the base layer or from the additional layer. According to another variant, only an indicator is decoded from the base layer or from the additional layer. This indicator makes it possible to identify the transform to be applied at step 12. Depending on the decoded indicator, the decoding method knows which NCL to CL transform's coefficients to use. The coefficients of the NCL to CL transform or the indicator are advantageously encoded in the SPS. According to another variant, a flag is decoded from the additional layer that specifies if the step 12 is to be applied or not, i.e. if the constant luminance additional layer picture block is predicted from constant luminance base layer picture blocks or from non-transformed base layer picture blocks, i.e. from non-constant luminance picture blocks. Depending on the value of the flag, step 12 is activated or not. The flag thus takes binary values. The flag is decoded from one of the block/PU/macroblock/slice headers or from the SPS (English acronym of Sequence Parameter Set) or PPS (English acronym of Picture Parameter Set) as defined in MPEG-4 AVC and HEVC. It is noticed that the detailed operations of the transform can be factorized in Look Up Tables (LUT) for efficient computation. Moreover, the described transforms are often optimized through instruction sets (SIMD...) or particular circuitry on most processors (DSP, FPGA, ASIC).

In a step 14, a constant luminance additional layer picture block is decoded from the additional layer and further from at least one constant luminance base layer picture block obtained at step 12.

According to a specific embodiment depicted on **Figure 3****,** the decoding of a constant luminance additional layer picture block comprises, at step 140, decoding from the additional layer coefficients such as DCT coefficients by entropy decoding. The coefficients are then scaled and then transformed into residues at step 142. The additional layer picture block is then decoded by adding prediction data to the residues at step 144. According to a specific embodiment, for one additional layer picture block, the prediction data are one constant luminance base layer picture block obtained at step 12. In the case of spatial scalability, the base layer pictures' size is lower than the size of the additional layer pictures. Consequently, the constant luminance base layer pictures of step 12 are upscaled so that the size of the upscaled constant luminance base layer pictures equal the size of the additional layer pictures. According to a variant, the upscaling is applied on the decoded non-constant luminance base layer pictures before the transformation step 12. Step 12 is thus applied on upscaled non-constant luminance base layer pictures. The upscaled constant luminance base layer pictures are used in the prediction step 144.

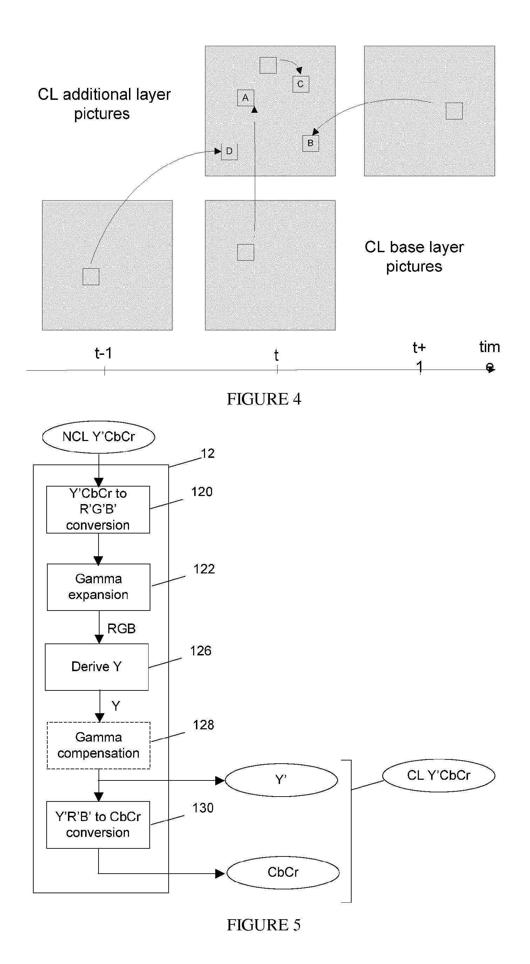

Usually, the decoding is a block based decoding. Thus, for each block of an additional layer picture a prediction block is determined and added to the block of residues. The prediction block is usually but not necessarily the co-located block in the temporally coinciding constant luminance base layer picture as depicted on **Figure 4** for block A. The co-located block is the block with the same spatial position. If the prediction block is not co-located then motion data are either decoded from the additional layer or reconstructed. These motion data are used to identify the position of the prediction block in the base layer picture.

According to a variant, some part of the additional layer pictures are predicted from constant luminance base layer pictures while other parts are predicted either from previously reconstructed additional layer pictures (inter picture prediction) such as block B on figure 4 or from previously reconstructed parts of the same additional layer picture (intra picture prediction) such as block C on Figure 4. According to another variant, a block of the additional layer picture such as block D on figure 4 is predicted from a block located in a constant luminance base layer picture that is not temporally coinciding with the picture the block D belongs to.

According to a specific embodiment, the decoding method according to the invention further comprises decoding for each layer of the scalable bitstream an index indicating whether this layer encodes constant luminance pictures or non-constant luminance pictures. The index is for example specified in a sequence parameter set as defined in MPEG-4 AVC and HEVC especially in the VUI (English acronym of "Video Usability Information"). The index makes it possible to know when to apply the transform of step 12. The decoding method is disclosed for one base layer and one additional layer but can be generalized to one base layer and more than one additional layer. In this case, the pictures of an additional layer N are predicted from pictures of a lower layer N-1, the lower layer being either the base layer or another additional layer. In the case where the pictures of an additional layer N are predicted from the pictures of an additional layer N-1, the step 12 is applied on the pictures of the additional layer N-1 if they are non-constant luminance pictures, which is indicated by their index.

The first embodiment disclosed on Figure 1A can be applied to non-scalable bitstreams as depicted on **Figure1****B.** This method can be used in the context of splicing. A non-scalable bitstream can encode both NCL and CL pictures. In this case, at step 10', a non-constant luminance picture block is decoded from the bitstream. The decoding comprises entropy decoding, scaling and transform to get residues. Prediction data are added to the residues to decode the non-constant luminance picture block.

In step 12', the decoded non-constant luminance picture block is transformed into a transformed constant luminance picture block. All the variants disclosed with respect to step 12 (i.e. decoding from the bitstream of transform's coefficients, of an indicator, of a flag) apply to step 12'.

In step 14', a constant luminance picture block is decoded from the bitstream and further from at least one transformed constant luminance picture block obtained at step 12'. In case of bi-prediction, the constant luminance picture block is decoded from the bitstream and further from one transformed constant luminance picture block obtained at step 12' and from one additional block. The additional block is either one transformed constant luminance picture block obtained at step 12', another constant luminance picture block previously decoded at step 14 or even one non-constant luminance picture block previously decoded at step 10'.

The decoding of a constant luminance picture block comprises, decoding from the bitstream coefficients such as DCT coefficients by entropy decoding. The coefficients are then scaled and then transformed into residues. The constant luminance picture blocks are then decoded by adding prediction data to the residues. According to a specific embodiment, the prediction data are one transformed constant luminance picture block obtained at step 12'. The non-constant luminance picture block is for example identified in a reference picture with motion data such as a motion vector and possibly a picture index for identifying the reference picture.

The prediction data can further be an average, possibly a weighted average, of two reference blocks. The reference blocks are either two transformed constant luminance picture blocks obtained at step 12' or one transformed constant luminance picture block obtained at step 12' and one constant luminance picture block previously decoded at step 14', i.e. obtained from a CL picture. The reference blocks are identified with motion data, e.g. motion vectors and possibly reference indices.

**Figure 5** depicts a specific embodiment of the steps 12 and 12', wherein the decoded non-constant luminance pictures/blocks are represented as an Y'CbCr signal. In the literature, Y'CbCr is also sometimes referred to as Y'Cb'Cr.' With reference to figure 5, it should be clear that the non-constant luminance pictures/blocks encompass base layer non-constant luminance pictures/blocks. According to a variant, the decoded non-constant luminance pictures/blocks are represented as an R'G'B', Y'CoCg or other luma (Y') and chroma derived signals.

Transforming the non-constant luminance pictures/blocks into constant luminance pictures/blocks thus comprises converting at step 120, the non-constant luminance Y'CbCr signal into an R'G'B' signal. The equations mentioned in recommendation ITU-R BT.1361 are used for this purpose. The R'G'B' signal is then further transformed into a linear-light RGB signal (i.e. tristimulus values and luminance are directly proportional to light power) through gamma expansion at step 122. The luminance signal Y is then obtained at step 126 from the linear-light RGB signal, while the RGB signal is then transformed into an R'G'B' signal through gamma compensation at step 128. According to a variant the gamma compensation is avoided by reusing directly the R'G'B' signal obtained at step 120. The chroma components CbCr are then obtained from Y'R'B' at step 130 according to equations of table 4 in ITU-R BT.2020. Steps 120 to 130 can be replaced by a single step applying a single NCL to CL transform optimal in the sense of a metric such as LMS (English acronym of "Least Mean Square").

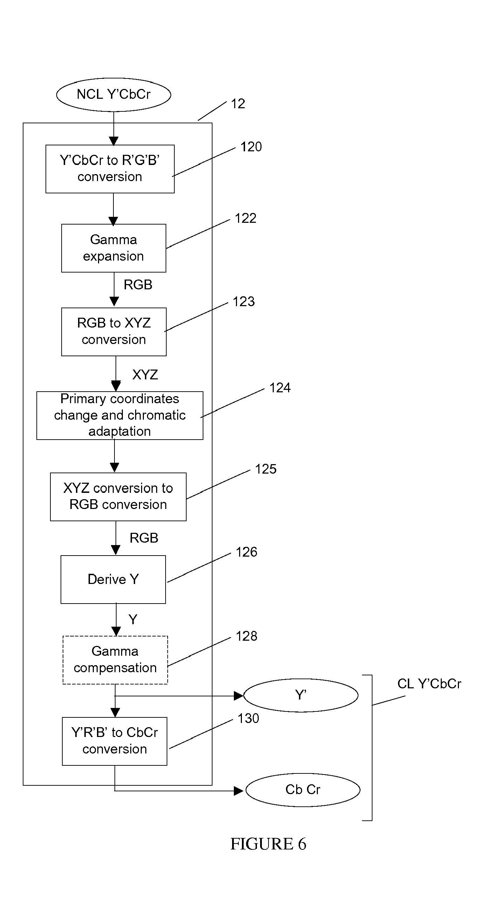

According to another embodiment depicted on **Figure 6****,** transforming the non-constant luminance pictures/blocks into constant luminance pictures/blocks further comprises adapting primaries coordinates and optionally performing chromatic adaptation. Consequently, after gamma expansion at step 122, it comprises at step 124 transforming RGB color components into XYZ and further changing primary coordinates and performing chromatic adaptation at step 124. In a step 125, the XYZ color components thus obtained are transformed to RGB color components whose primaries are different from the primaries of the initial RGB color components. This RGB signal is then used as input for step 126.

XYZ is the CIE 1931 XYZ color space. Conversions tables from a given RGB to XYZ ("absolute" color space) can be computed from primary coordinates and reference white. Chromatic adaptation allows changing reference white for instance D65 (SDTV (ITU-R BT.601), HDTV (ITU-R BT.709), UHDTV (ITU-R BT.2020)) to D50 (Digital Cinema (DClv1.2)).

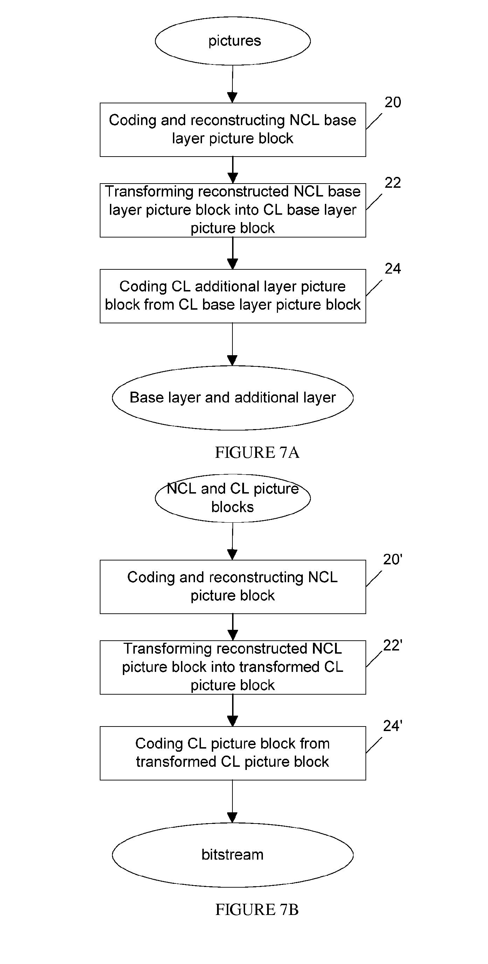

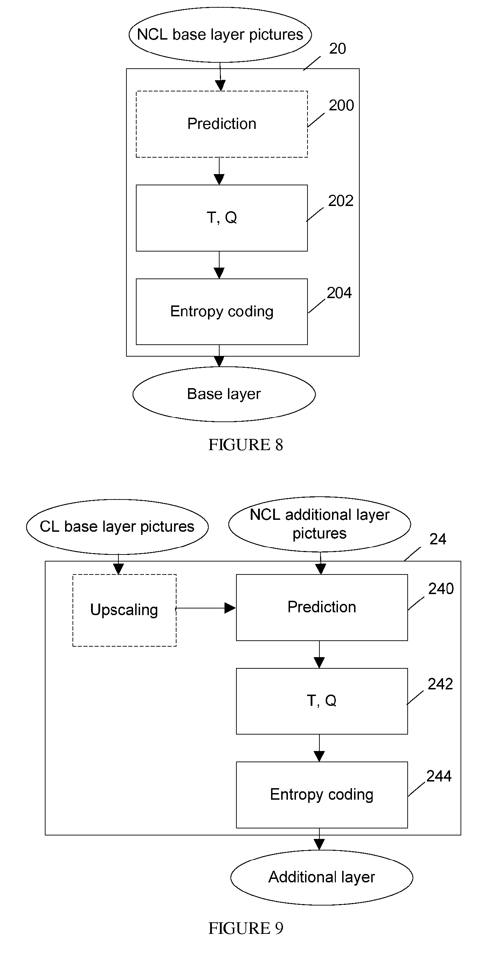

**Figure 7A** depicts the flowchart of a coding method according to the invention. In a step 20, a non-constant luminance base layer picture block is coded into a base layer and further reconstructed. According to a specific embodiment disclosed on **Figure 8**, the coding of the non-constant luminance base layer picture block comprises an optional step 200. At step 200, the non-constant luminance base layer picture block is predicted by prediction data.

The prediction data are subtracted from the non-constant luminance base layer picture block to get residues. The prediction data are obtained either from previously reconstructed base layer pictures (inter picture prediction) or from previously reconstructed parts of the same base layer picture (intra picture prediction) stored in a memory. These steps are well known by the one skilled in the art are not further disclosed. The residues in case of prediction or the picture data otherwise are transformed (e.g. using a DCT transform) into coefficients which are then quantized at step 202. The quantized coefficients are also inverse quantized and inverse transformed to get reconstructed residues. The reconstructed residues are optionally added to prediction data in case of predictive encoding to get reconstructed non-constant luminance base layer picture blocks which are stored in a memory. The quantized coefficients are further entropy coded at step 204 into a base layer. According to another embodiment, the base layer pictures are encoded using an MCTF (MCTF is the English acronym of Motion Compensation Temporal Filtering) coding scheme using wavelet transform. Any other proprietary coding scheme can be used. The base layer pictures are for example encoded according to the MPEG-4 AVC standard. According to a variant, the base layer pictures are encoded according to the HEVC standard or to the MPEG-2 standard, or to any other standard. Indeed, the invention is not limited by the way the base layer pictures are encoded.

In a step 22, the reconstructed non-constant luminance base layer picture block is transformed into a constant luminance base layer picture block. Step 22 of the encoding method is identical to step 12 of the decoding method. All the variants disclosed with respect to step 12 can be used at step 22. Therefore, step 22 may comprise encoding of NCL to CL transform's coefficients or of an indicator indicating which NCL to CL transform to use, and possibly of a flag to indicate if step 22 is applied or not.

In a step 24, the constant luminance additional layer picture block is encoded from the constant luminance base layer picture block into an additional layer. According to a specific embodiment depicted on **Figure 9**, the encoding of the constant luminance additional layer picture block comprises, at step 240, subtracting prediction data from the additional layer picture block to get residues. According to a specific embodiment, the prediction data are the constant luminance base layer picture block. In the case of spatial scalability, the base layer pictures' size is lower than the size of the additional layer pictures. Consequently, the constant luminance base layer pictures are upscaled so that the size of the upscaled constant luminance base layer pictures equal the size of the additional layer pictures. According to a variant, the upscaling is applied on the reconstructed non-constant luminance base layer pictures before the transformation step 22. Step 22 is thus applied on upscaled non-constant luminance base layer pictures. In this case, the upscaled constant luminance base layer pictures are used in the prediction step 240. Usually, the coding is a block based coding. Thus, for each block of an additional layer picture a prediction block is determined. The prediction block is usually but not necessarily the co-located block in the temporally coinciding constant luminance base layer picture as depicted on **Figure 4** for block A. All the variants disclosed with respect to Figure 4 for the decoding method can be applied to the encoding method. Thus motion data are encoded when the prediction block is not-colocated.

At step 242, the residues are transformed (e.g. using a DCT transform) into coefficients which are then quantized. The quantized coefficients are further entropy coded at step 244 into the additional layer. The base layer and the additional layer form a bitstream.

According to a specific embodiment of the encoding method according to the invention, the encoding method further comprises encoding for each layer of the scalable bitstream an index indicating whether this layer encodes constant luminance pictures or non-constant luminance pictures. The index is for example specified in a sequence parameter set as defined in MPEG-4 AVC and HEVC especially in the VUI (English acronym of "Video Usability Information"). The encoding method is disclosed for one base layer and one additional layer but can be generalized to one base layer and more than one additional layer. In this case, the pictures of an additional layer N are predicted from pictures of a lower layer N-1, the lower layer being either the base layer or another additional layer. In the case where the pictures of an additional layer N are predicted from the pictures of an additional layer N-1, the step 12 is applied on the pictures of the additional layer N-1 if they are non-constant luminance pictures.

The embodiment disclosed on Figure 7A can be applied to non scalable bitstreams as depicted on **Figure 7****B.** Indeed, a non-scalable bitstream can encode both NCL and CL pictures. In a step 20', a non-constant luminance picture block is coded into a bitstream and further reconstructed. The encoding comprises subtracting prediction data from the non-constant luminance picture block to get residues. The residues are then transformed, quantized and entropy coded.

In a step 22', the reconstructed non-constant luminance picture block is transformed into a transformed constant luminance picture block. All the variants disclosed with respect to step 22 (i.e. encoding in the bitstream of transform's coefficients, of an indicator, of a flag) apply to step 22'.

In a step 24', the constant luminance block is encoded from at least one transformed constant luminance picture block obtained at step 22' into the bitstream. In case of bi-prediction, the constant luminance picture block is encoded from at least one constant luminance picture block obtained at step 22' and from either one additional transformed constant luminance picture block obtained at step 22' or another constant luminance picture block previously encoded at step 24'.

The coding of a constant luminance picture block comprises subtracting prediction data from the constant luminance picture block to get residues. The residues are then transformed into coefficients such as DCT coefficients and quantized before being entropy coded into the bitstream.

According to a specific embodiment, for one constant luminance picture block, the prediction data are one transformed constant luminance picture block obtained at step 22'. The non-constant luminance picture block is for example identified in a reference picture with a motion vector and possibly a picture index for identifying the reference picture.

The prediction data can further be an average, possibly a weighting average, of two reference blocks. The reference blocks are either two transformed constant luminance picture blocks obtained at step 22' or one transformed constant luminance picture block obtained at step 22' and one constant luminance picture block previously encoded at step 24', i.e. obtained from a CL picture. The reference blocks are identified with motion vectors and possibly reference index.

All the previous embodiments can be applied by replacing NCL pictures/blocks with CL pictures/blocks and CL pictures/blocks with NCL pictures/blocks. Consequently, NCL pictures/blocks can be predicted from CL pictures/blocks. In this case, the CL pictures/blocks are possibly transformed into NCL pictures/blocks before prediction using a CL to NCL transform. More generally, all the previous embodiments can be applied by replacing NCL pictures/blocks with pictures/blocks obtained with a first luminance workflow and CL pictures/blocks with pictures/blocks obtained with a second luminance workflow, the second workflow being different from the first workflow. In this case, the pictures/blocks compliant with the first luminance workflow are possibly transformed into pictures/blocks compliant with the second luminance workflow before prediction.

A video bitstream is also disclosed. The video bitstream comprises an indicator, this indicator making it possible to identify the transform to be applied at step 12'. According to a variant, the scalable video bitstream encodes coefficients of the transform applied at step 12'. According to another embodiment, the video bitstream comprises at least one binary flag that specifies whether the step 12' is to be applied or not. The flag is decoded from one of the block/PU/macroblock/slice headers or from the SPS (English acronym of Sequence Parameter Set) or PPS (English acronym of Picture Parameter Set) as defined in MPEG-4 AVC and HEVC.

A scalable video bitstream is also disclosed that comprises a base layer and at least one additional layer. The video bitstream comprises for each layer an index indicating whether this layer encodes constant luminance pictures or non-constant luminance pictures. The index is for example specified in a sequence parameter set as defined in MPEG-4 AVC and HEVC especially in the VUI (English acronym of "Video Usability Information"). According to another embodiment the scalable video bitstream comprises an indicator, this indicator making it possible to identify the transform to be applied at step 12. According to a variant, the scalable video bitstream encodes coefficients of the transform applied at step 12. According to another embodiment, the video bitstream comprises at least one binary flag that specifies whether the step 12 is to be applied or not. The flag is decoded from one of the block/PU/macroblock/slice headers or from the SPS (English acronym of Sequence Parameter Set) or PPS (English acronym of Picture Parameter Set) as defined in MPEG-4 AVC.

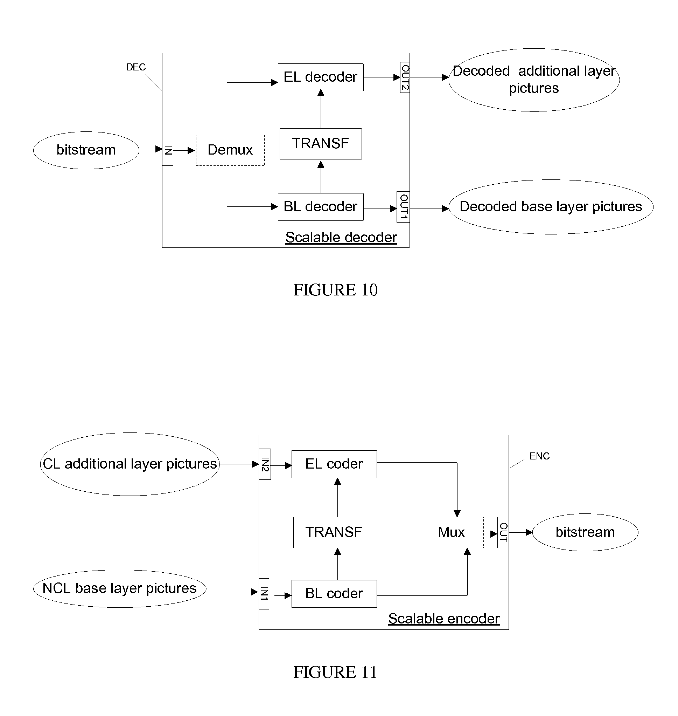

**Figure 10** depicts a scalable video decoder DEC according to the invention. The decoder DEC receives on a first input IN a scalable bitstream. The input is connected to a demultiplexer DEMUX configured to demultiplex the bitstream into a base layer BL and at least one additional layer EL. According to a variant not represented on Figure 10, the decoder DEC comprises two inputs and receives on a first input the base layer BL and on the second input the additional layer EL. In this case, the decoder DEC does not comprise DEMUX. The DEMUX if present is connected to a base layer decoder adapted to implement the step 10 and thus to decode the base layer according to one of the various embodiments of the decoding method disclosed with reference to figures 1A and 2. The base layer decoder sends the decoded non-constant luminance base layer pictures to a module TRANSF configured to transform the decoded non-constant luminance base layer pictures into constant luminance base layer pictures. The module TRANSF is adapted to implement the step 12 of the decoding method according to the invention. The module TRANSF is further adapted to bypass step 12 when specified for example by the binary flag. The DEMUX if present is further connected to an additional layer decoder adapted to implement the step 14 and to decode the additional layer according to one of the various embodiments of the decoding method disclosed with reference to figures 1A and 3. The decoded non-constant luminance base layer pictures are then transmitted on a first output of the decoder OUT1 and the decoded constant luminance additional layer pictures are then transmitted on a second output of the decoder OUT2. As an example, a first view is transmitted on the first output OUT1 and a second view is transmitted on the second output OUT2. These two views are then displayed on a 3D display. As another example, only decoded constant luminance additional layer pictures are transmitted on the second output OUT2 for being displayed on a 2D display such as an UHDTV display. According to a variant not represented on Figure 10, the decoder DEC only comprises the second output of the decoder OUT2.

**Figure 11** depicts a scalable video encoder according to the invention. The encoder ENC receives on a first input IN1 non-constant luminance base layer pictures and on a second input constant luminance additional layer pictures. The first input IN1 is connected to a base layer encoder adapted to implement the step 20 and thus to encode and reconstruct the non-constant luminance base layer pictures according to one of the various embodiments of the encoding method disclosed with reference to figures 7A and 8. The base layer encoder sends the reconstructed non-constant luminance base layer pictures to a module TRANSF configured to transform the reconstructed non-constant luminance base layer pictures into constant luminance base layer pictures. The module TRANSF is adapted to implement the step 22 of the encoding method according to the invention. The second input IN2 is connected to an additional layer encoder adapted to implement the step 24 and thus to encode the constant luminance additional layer pictures according to one of the various embodiments of the encoding method disclosed with reference to figures 7A and 9.

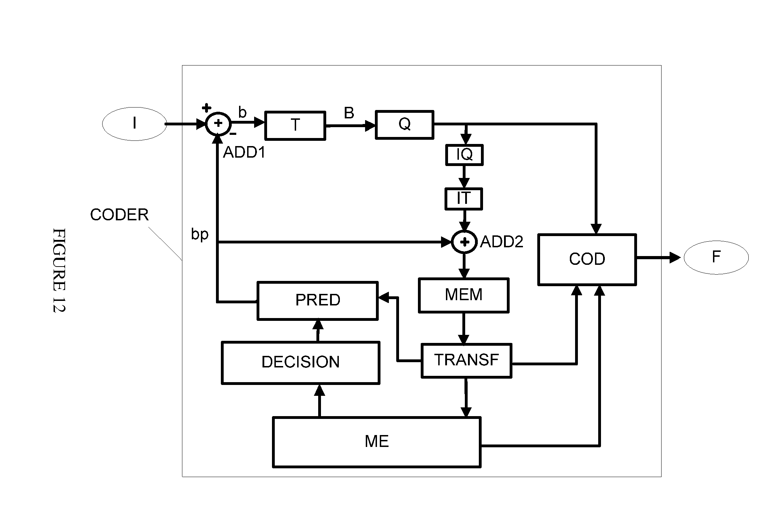

**Figure 12** depicts a mono-layer, i.e. non scalable, video encoder CODER according to the invention. The video encoder CODER receives as input pictures I belonging to a video. The video encoder CODER notably implements a coding with temporal prediction. Only the modules of the video encoder CODER relating to coding by temporal prediction or INTER coding are depicted on figure 12. Other modules not represented and known to those skilled in the art of video coders implement the INTRA coding with or without spatial prediction. The video encoder CODER notably comprises a calculation module ADD1 able to extract, for example by subtraction pixel by pixel, from a current block b_{cur} a prediction block bp to generate a block of residues b. The video encoder further comprises a transformation module T able to transform with a transform T the block of residues b into a block of coefficients B. The transform T is for example a DCT. The output of the transformation module T is connected to the input of a quantization module Q able to quantize the block of coefficients B into quantized data. The output of the quantization module is connected to the input of the entropy coding module COD able to code the quantized data into a bitstream F. It further comprises a module IQ performing the inverse operation of the quantization module Q. The module IQ is connected to a module IT performing the inverse operation of the transformation module T. The output of the module IT is connected to a calculation module ADD2 capable of adding pixel by pixel the block of data from the module IT and the prediction block bp to generate a reconstructed block that is stored in a memory MEM. The memory MEM is connected to a transform module TRANSF itself connected to a prediction module PRED. The transform module TRANSF is adapted to implement step 12' of the decoding method and is further adapted to bypass step 12' when required for example by the value of the binary flag. The transform module TRANSF is also connected to the entropy coding module COD to transmit either the transform's coefficients or an indicator for indicating which transform to use and/or the binary flag.

The coding device CODER also comprises a motion estimation module ME able to estimate at least one motion vector Vp between the block b_{cur} and a reference picture Ir stored in the memory MEM possibly transformed by the module TRANSF, this picture having previously been coded then reconstructed. According to one variant, the motion estimation can be made between the current block b_{cur} and the source picture corresponding to Ir, in which case the memory MEM is not connected to the motion estimation module ME. According to a method well known to those skilled in the art, the motion estimation module searches in the reference picture Ir, respectively in the corresponding source picture, for a motion vector so as to minimise an error calculated between the current block b_{cur} and a block in the reference picture Ir, respectively in the corresponding source picture, identified using the motion vector. According to one variant, the motion vector is determined by phase correlation or overall motion estimation or even by "template matching". The motion data is transmitted by the motion estimation module ME to a decision module DECISION able to select a coding mode for the block b_{cur} in a predefined set of coding modes. The chosen coding mode is for example the one that minimizes a bitrate-distortion type criterion. However, the invention is not restricted to this selection method and the mode chosen can be selected according to another criterion for example an a priori type criterion. The coding mode selected by the decision module DECISION as well as the motion data, for example the motion vector or vectors in the case of the temporal prediction mode or INTER mode are transmitted to the prediction module PRED. The motion vector or vectors and the selected coding mode are moreover transmitted to the entropy coding module COD to be coded in the stream F. If a prediction mode INTER is retained by the decision module DECISION, the prediction module PRED then determines in the reference picture Ir previously reconstructed, stored in the memory MEM and possibly transformed by the transformation module TRANSF, the prediction block bp from the motion data determined by the motion estimation module ME. If a prediction mode INTRA is retained by the decision module DECISION, the prediction module PRED determines in the current picture, among the blocks previously coded and stored in the memory MEM, the prediction block bp.

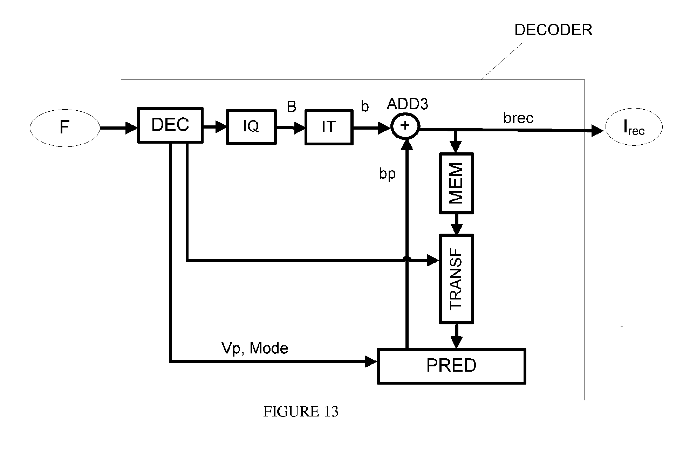

**Figure 13** depicts a mono-layer video decoder according to the invention. The video decoder DECODER receives at input a bitstream F representative of a video. The bitstream F is for example transmitted by an encoder CODER such as the one depicts on figure 12. The decoder DECODER comprises an entropy decoding module DEC able to generate decoded data, for example coding modes and decoded data relating to the content of the pictures. The entropy decoding module DEC is also able to decode data relative a decorrelation between two color components of a picture of the video. The decoding device DECODER further comprises a motion data reconstruction module. According to a first embodiment, the motion data reconstruction module is the entropy decoding module DEC that decodes a part of the stream F representative of motion vectors.

According to a variant not shown in figure 13, the motion data reconstruction module is a motion estimation module. This solution for reconstructing motion data by the decoding device DECOD is known as "template matching".

The decoded data relating to the content of the pictures is then sent to an inverse quantization module IQ able to perform an inverse quantization of the decoded data to obtain a block of coefficients B. The module IQ is connected to a transformation IT module able to perform an inverse transformation to the one performed by the module T of the coding device CODER. The modules IQ and IT are identical to the modules IQ respectively IT of the coding device CODER having generated the bitstream F. The module IT is connected to a calculation module ADD3 able to merge, for example by pixel to pixel addition, the block of residues b from the module IT and a prediction block bp to generate a reconstructed block b_{rec} that is stored in a memory MEM. The decoding device DECODER also comprises a prediction module PRED identical to the prediction module PRED of the coding device CODER. The memory MEM is connected to a transform module TRANSF itself connected to the prediction module PRED. The transform module TRANSF is adapted to implement step 22' of the decoding method and is further adapted to bypass step 22' when required for example by the value of the binary flag. The transform module TRANSF is also connected to the entropy decoding module DEC to receive either the transform's coefficients or an indicator for indicating which transform to use and/or the binary flag.

If a prediction mode INTER is decoded, the prediction module PRED determines in a reference picture Ir previously reconstructed, stored in the memory MEM and possibly transformed by the module TRANSF, the prediction block b_{cur} from motion data decoded by the entropy decoding module DEC. If a prediction mode INTRA is decoded, the prediction module PRED determines in the current picture among the blocks previously reconstructed and stored in the memory MEM, the prediction block bp.

The video coders and decoders according to the invention, scalable or not, are for example implemented in various forms of hardware, software, firmware, special purpose processors, or a combination thereof. Preferably, the present principles may be implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof) that is executed via the operating system. In addition, various other peripheral devices may be connected to the computer platform such as an additional data storage device and a printing device.

According to variants, the coding and decoding devices according to the invention are implemented according to a purely hardware realisation, for example in the form of a dedicated component (for example in an ASIC (Application Specific Integrated Circuit) or FPGA (Field-Programmable Gate Array) or VLSI (Very Large Scale Integration) or of several electronic components integrated into a device or even in a form of a mix of hardware elements and software elements.

## Claims

1. A decoding method for decoding a video bitstream comprising:
- decoding (12, 12') a picture block compliant with a first luminance workflow from a first part of the video bitstream;
- transforming (14, 14') the picture block into a transformed picture block compliant with a second luminance workflow different from the first luminance workflow; and
- decoding (16, 16') a picture block compliant with the second luminance workflow from the transformed picture block and from a second part of the video bitstream.

2. The method according to claim 1, wherein the first luminance workflow is a non-constant luminance workflow and the second luminance workflow is a constant-luminance workflow or inversely the first luminance workflow is a constant luminance workflow and the second luminance workflow is a non-constant luminance workflow.

3. The method according to claim 1 or 2, wherein transforming comprises applying a transform and wherein the method further comprises decoding coefficients of the transform.

4. The method according to any one of claims 1 to 2, wherein transforming comprises applying a transform and wherein the method further comprises decoding an index indicating which transform to apply.

5. The method according to any one of claims 1 to 4, further comprising decoding at least one flag indicating whether or not to apply the transform.

6. The method according to any one of claims 1 to 5, wherein transforming further comprises adapting primary coordinates.

7. The method according to claim 6, wherein transforming further comprises performing chromatic adaptation.

8. The method according to any one of claims 1 to 7, wherein the video bitstream comprises one base layer and at least one additional layer and wherein the first part of the bitstream is the base layer and the second part of the bitstream is the at least one additional layer.

9. A coding method for coding a video into a video bitstream comprising:
- coding (20, 20') a picture block compliant with a first luminance workflow into a first part of the video bitstream and reconstructing the picture block;
- transforming (22, 22') the reconstructed picture block into a transformed picture block compliant with a second luminance workflow different from the first luminance workflow; and
- coding (24, 24') a picture block compliant with the second luminance workflow from the transformed picture block into a second part of the video bitstream.

10. The method according to claim 9, wherein the first luminance workflow is a non-constant luminance workflow and the second luminance workflow is a constant luminance workflow or inversely the first luminance workflow is a constant luminance workflow and the second luminance workflow is a non-constant luminance workflow.

11. The method according to claim 9 or 10, wherein transforming comprises applying a transform and wherein the method further comprises coding coefficients of the transform.

12. The method according to any one of claims 9 to 11, wherein transforming comprises applying a transform and wherein the method further comprises coding an index indicating which transform to apply.

13. The method according to any one of claims 9 to 12, further comprising coding at least one flag indicating whether or not to apply the transform.

14. The method according to any one of claims 9 to 13, wherein transforming further comprises adapting primary coordinates

15. The method according to claim 14, wherein transforming further comprises performing chromatic adaptation.

16. The method according to any one of claims 9 to 15, wherein the video bitstream comprises one base layer and at least one additional layer and wherein the first part of the bitstream is the base layer and the second part of the bitstream is the at least one additional layer.

17. A video decoder for decoding a video bitstream comprising:
- means for decoding (DEC, IQ, IT) a picture block compliant with a first luminance workflow from a first part of the video bitstream;
- means for transforming (TRANSF) the picture block into a transformed picture block compliant with a second luminance workflow different from the first luminance workflow; and
- means for decoding (DEC, IQ, IT, PRED) a picture block compliant with the second luminance workflow from the transformed picture block and from a second part of the video bitstream.

18. The video decoder according to claim 17, wherein the decoder is adapted to execute the steps of the decoding method according to any of claims 1 to 8.

19. A video coder for coding a video into a video bitstream comprising:
- means for coding (ADD1, T, Q, COD) a picture block compliant with a first luminance workflow into a first part of the video bitstream;
- means for reconstructing (IQ, IT, ADD2) the picture block into a reconstructed picture block;
- means for transforming (TRANSF) the reconstructed picture block into a transformed picture block compliant with a second luminance workflow different from the first luminance workflow; and
- means for coding (ADD1, T, Q, COD, PRED) a picture block compliant with the second luminance workflow from the transformed picture block into a second part of the video bitstream.

20. The video coder according to claim 19, wherein the decoder is adapted to execute the steps of the decoding method according to any of claims 9 to 16.

21. A video bitstream encoding at least one picture block compliant with a first luminance workflow, one picture block compliant with a second luminance workflow different from the first luminance workflow and at least one data relative to a transformation of the at least one picture block compliant with the first luminance workflow into a transformed picture block compliant with a second luminance workflow.
